# EUROPEAN PATENT APPLICATION

(11) **EP 0 969 666 A2**
(43) Date of publication of application: **05.01.2000**
(21) Application number: 99112404.1
(22) Date of filing: 29.06.1999
(51) Int. Cl.: H04N 7/16

(54) **Broadcasting apparatus and terminal apparatus for digital broadcasting service**

(30) Priority: 30.06.1998 JP 18443198
(71) Applicant: TOKYO BROADCASTING SYSTEM INC., Tokyo107-8006 (JP)
(72) Inventor: Shimizu, Takao, c/o Tokyo Broadcasting System, Inc, Tokyo 107-8006 (JP); Sasada, Masaaki, c/o Tokyo Broadcasting Syst. Inc., Tokyo 107-8006 (JP); Kato, Tatsuhito, c/o Tokyo Broadcasting Syst. Inc., Tokyo 107-8006 (JP); Takahashi, Toshiaki, Tokyo Broadcasting Syst., Inc, Tokyo 107-8006 (JP)
(74) Representative: Grünecker, Kinkeldey, Stockmair & Schwanhäusser Anwaltssozietät

(57) **Abstract**

A terminal apparatus for digital broadcasting outputs video and audio information based on a stream transmitted from a broadcasting station. The terminal apparatus stores a storage type stream transmitted from the broadcasting station in a storage unit and replaces part of a main stream transmitted from the broadcasting station with the storage type stream read out from the storage unit. The terminal apparatus stores or reads those streams based on control information correlated with those streams.

## Description

### BACKGROUND OF THE INVENTION

### 1. Field of the Invention

The present invention relates to a digital broadcasting system, a method for controlling digital streams and a receiving terminal apparatus (a so-called International Receiver Decoder (IRD)).

### 2. Description of the Related Art

In a conventional broadcasting service, viewers watch a broadcasting program (contents) prepared in advanced by a broadcasting station by adequately selecting it with their receiver unit. Therefore, even though the viewers can select the broadcasting program per broadcasting station, they cannot individually select the contents composing the broadcasting program itself.

In addition, the broadcasting service assuming the conventional ground wave is divided into a plurality of areas with the limit being the attainable range of the broadcasting radio wave output from a ground station. Accordingly, a so-called nation-wide network program broadcasted from a key station to the whole nation is generally composed of parts to be broadcasted to the whole nation and parts such as a commercial to be broadcasted to a local area. When a commercial or the like is to be broadcasted in a broadcasting program while broadcasting the main contents of the program from the key station, a control signal called a Q signal for inserting the commercial is transmitted and a local station receiving that signal broadcasts the commercial prepared in advance for the local area instead of a commercial for the key station at a predetermined timing. Accordingly, while such replacement allows a broadcasting service per specific area to be realized, its service range is the area per broadcasting station and a further personalized service cannot be provided.

Meanwhile, in recent years, a satellite broadcasting service using broadcasting satellites is being provided on a full-scale. With satellite broadcasting service, it has become possible to broadcast across a plurality of areas which had been covered by the respective ground stations in the past. However, while satellite broadcasting allows the broadcasting service to be provided to a wide area with the same radio wave, there is a case when the contents of the program are not necessary at all or the necessity thereof is very low for viewers of a specific local area depending on the contents thereof, and it is rather undesirable from the aspect of personalization of the service.

### SUMMARY OF THE INVENTION

The gist of the invention is to restructure a broadcasting program provided by a broadcasting station as a broadcasting program having different contents per viewer in a terminal apparatus of the viewer in order to realize the personalization of the digital broadcasting service. For instance, a broadcasting program provided by a broadcasting station is restructured in the terminal apparatus of the viewer by replacing a part of the contents thereof with other contents according to the receiving area and preference of the viewer.

The inventive terminal apparatus for digital broadcasting outputs video and audio information based on a transmitted individual stream. It reads a second individual stream (storage stream) stored in a storage unit instead of a partial stream composing a first individual stream (main stream) to output video and audio information in accordance with control information transmitted in correspondence with the first individual stream.

The terminal apparatus stores the second individual stream to the storage unit in accordance with control information correlated with the transmitted second individual stream.

The terminal apparatus also compares the first control information with terminal information specified by a user to extract the second individual stream stored in the storage unit corresponding to the result of comparison. The terminal information is input by the viewer via inputting means or is transmitted as a stream. The terminal information may also be provided as a recording medium and be read from a reading unit.

The invention also relates to a broadcasting unit in a digital broadcasting system for transmitting a multiplexed stream composed of a plurality of streams based on the contents of a program to be broadcasted to the terminal apparatus of the viewer, comprising first control information appending means for correlating first control information per partial stream composing a first individual stream; second control information appending means for correlating second control information per second individual stream; and stream generating means for generating a multiplexed stream based on the first individual stream correlated with the first control information and the second individual stream correlated with second control information.

It is noted that the video and audio information means not only both the video and audio information but also either one of the video and audio information. Still more, text data such as characters is contained in the video information unless separately specified.

The present invention allows a broadcasting program personalized per viewer to be structured and a finely personalized digital broadcasting service to be realized.

The specific nature of the invention, as well as other objects, uses and advantages thereof, will clearly appear from the following description and from the accompanying drawings.

### BRIEF DESCRIPTION OF THE DRAWINGS

FIG. 1 is a block diagram showing overall whole structure of a broadcasting system according to an embodiment of the invention;
FIG. 2 is a block diagram for explaining how to generate a stream in a broadcasting station;
FIG. 3 is a conceptual diagram for explaining a stream;
FIG. 4A shows one example of broadcasting control information and FIG. 4B shows one example of storage control information;
FIG. 5 is a conceptual diagram for explaining stream control of the invention;
FIG. 6 is a block diagram showing the structure of a stream management unit;
FIG. 7 shows one example of terminal data;
FIG. 8 is a flowchart for explaining the operation of a stream storage control unit to a storage stream;
FIG. 9 is a flowchart for explaining the operation of the stream storage control unit to a main stream; and
FIG. 10 is a flowchart for explaining the operation of the stream storage control unit to the storage stream according to a second embodiment.

### DESCRIPTION OF THE PREFERRED EMBODIMENTS

Preferred embodiments of the invention are explained below in detail with reference to the appended drawings.

The present embodiment presupposes mainly a digital broadcasting service. That is, a bit stream of digital data of encoded video data (video signal) and audio data (audio signal) is distributed to viewers via transmitting media and is decoded by a terminal apparatus to be output as images and sounds. Specifically, the present embodiment utilizes a technology of transmitting a plurality of streams as one stream by multiplexing them and of demultiplexing them. The MPEG 2 standard has been known as such technology. Accordingly, the present embodiment will be explained by exemplifying the MPEG 2.

The MPEG 2 prescribes a Transport Stream (MPEG 2-TS) for time-division multiplexing and transmitting a plurality of programs (stream: also called a program) in order to be compatible with the digital broadcasting service. Accordingly, the digital broadcasting service utilizing the MPEG 2-TS allows a channel to be selected and a stream to be separated further from the selected channel. Thus, the MPEG 2 is provided with a so-called multi-program compatibility for transmitting a plurality of programs as one stream.

The MPEG 2-TS is transmitted by a transport stream packet (hereinafter referred to as a "TS packet") having a fixed length of 188 bytes. That is, a program in the digital broadcasting service is prescribed as a PES (Packetized Elementary Stream) of video and audio data. PSI (Program Specific Information) is also prescribed as information managing the PES. A typical PSI includes PAT (Program Association Table), PMT (Program Map Table), NIT (Network Information Table), CAT (Conditional Access Table) and others. Each of these PSIs is transmitted in a section format.

Control information (described in detail later) in the present embodiment is configured as part of the stream and is transmitted as the TS packet similar to the video and audio data. In this case, the control information is prescribed and transmitted in the PES format or the section format.

The present embodiments refer to "ISO/IEC 13818-1 Information technology-Coding of coding of moving pictures and associated audio information, MPEG SYSTEMS", "ISO/IEC 13818-2 MPEG VIDEO", "ISO/IEC 13818-6 Digital Storage Media Command and Control, MPEG DSM-CC", "ISO/IEC 13818-7 Advanced Audio Coding, MPEG AAC" and "ATSC Doc. A53 Digital Television Standard".

### First Embodiment

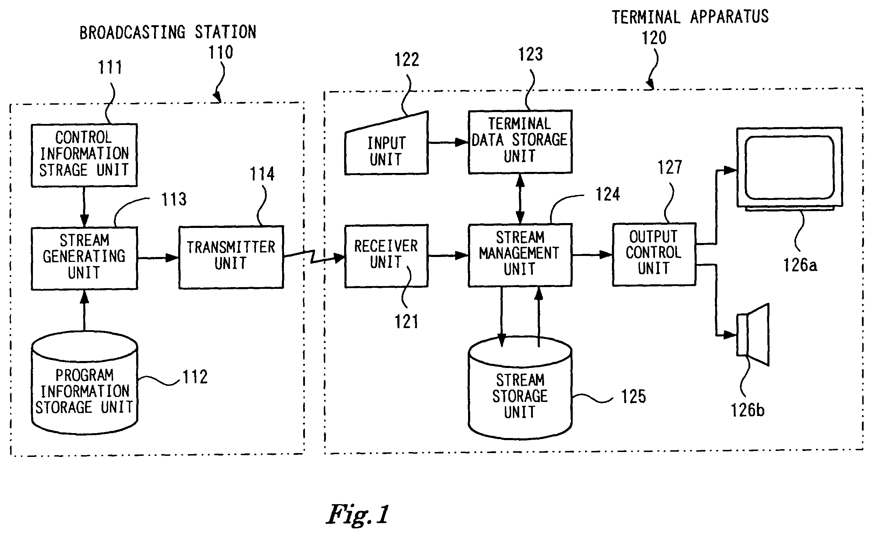

FIG. 1 is a block diagram showing the overall structure of a broadcasting system according to the first embodiment of the invention. As shown in the figure, this broadcasting system comprises a broadcasting station 110 for producing various programs and distributing them to respective viewers as streams and a terminal 120 for receiving the streams distributed (transmitted) from the broadcasting station 110 to output them as images and sounds.

The broadcasting station 110 is provided with a control information storage unit 111 for storing control information for controlling streams in the viewer's terminal 120, a program information storage unit 112 for storing contents composing a main program itself and contents for the data broadcasting, a stream generating unit 113 for generating streams containing the control information and program information, and a transmitting unit 114 for transmitting the generated streams to a broadcasting satellite for example.

The terminal 120 comprises a receiver 121 for receiving broadcasted radio (streams) from the broadcasting satellite or the like, an input unit 122 for inputting terminal data including viewer's personal data, a terminal data storage unit 123 for storing the terminal data input from the input unit 122, a stream management unit 124 for managing the streams so that a program is provided to the viewer in the end, a stream storage unit 125 for temporarily storing the received streams and an output control unit 127 for controlling output units 126a and 126b based on the stream sent from the stream management unit 124. Here, the output control unit 127 demultiplexes the streams into video and audio signals by a demultiplexer (DEMUX) not shown and sends them to the output units 126a and 126b via respective decoders not shown. The output units 126a and 126b are a display unit for displaying images based on the video signals and a speaker for outputting sounds based on the audio signals.

It is noted that although the streams are distributed from the broadcasting station 110 to the terminal 120 by the broadcasting satellite in the explanation described above, the present embodiment is not confined only thereto. For instance, the streams may be distributed by a communication satellite. Further, the streams may be distributed not only through the satellite broadcasting but also through the ground wave broadcasting and through the so-called cable television broadcasting (CATV), Internet and WAN (Wide Area Network). In short, any mode may be adopted as long as predetermined streams are transmitted to the viewer's terminal 120.

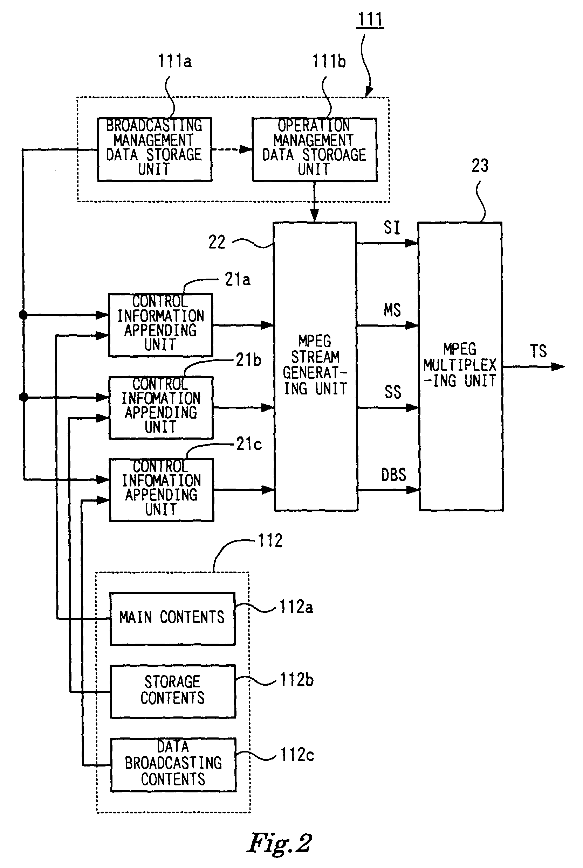

FIG. 2 is a block diagram for explaining how to generate the stream in the broadcasting station 110. The control information storage unit 111 shown in FIG. 1 has a broadcasting management data storage unit 111a and an operation management data storage unit 111b. The broadcasting management data storage unit 111a stores broadcasting management data including all control information contained in the streams to be transmitted. The operation management data storage unit 111b stores information necessary for actually broadcasting a program, i.e., information related to program broadcasting starting time, broadcasting time and others, as operation management data. The operation management data is converted and prepared from the broadcasting management data by a converter unit not shown. The program information storage unit 112 contains main contents 112a composing a program to be broadcasted, storage contents 112b to be replaced with part or whole of the program and data broadcasting contents 112c for data broadcasting. These contents are held in the program information storage unit 112 normally as digital data.

A control information appending unit 21a produces the main contents appended with control information and sends them to an MPEG stream generating unit 22. That is, the control information appending unit 21a reads the main contents from the program information storage unit 112 to append the control information to each part of the main contents shown in the broadcasting management data. Each part is a specific time zone, a commercial part and others within the program for example. Each part corresponds to a partial stream described later. In the same manner, a control information appending unit 21b generates the storage contents appended with control information and control information appending unit 21c generates the data broadcasting contents appended with control information and sends them to an MPEG stream generating unit 22.

The MPEG stream generating unit 22 generates each MPEG stream (denoted as MS, SS and DBS in the drawings) into which each control information appended content is compressed by the MPEG 2 format based on the operation management data. The MPEG stream generating unit 22 also generates an MPEG stream (EPG) corresponding to program sequence information given from input means not shown. Each MPEG stream is time-division multiplexed by an MPEG multiplexing unit 23 and is sent to the transmitting unit 114 as the stream.

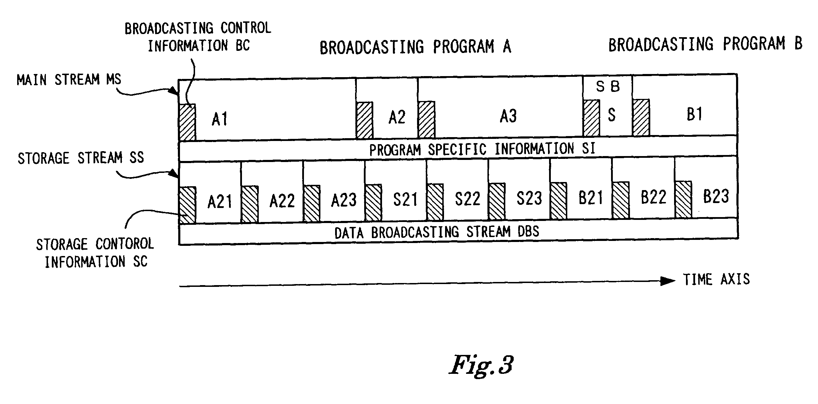

FIG. 3 is a conceptual diagram showing one exemplary stream. The figure shows a state in which various individual streams are time-division multiplexed and are transmitted as one stream as a whole.

In the figure, the main stream MS is video and audio data corresponding to each broadcasting program and broadcasting programs A and B are transmitted. There exists a time for assuring a switching time called SB (Station Break) between the respective broadcasting programs. Normally, a commercial is broadcasted during the SB. The storage stream SS is video and audio data provided to the viewers in place of at least part of the main stream MS or together therewith. The contents of a program, commercials or the like for a local area are transmitted by the storage stream SS.

Program sequence information SI is information related to programs such as titles of programs scheduled to be broadcasted and broadcasting date. The data broadcasting stream DBS is a program provided to the viewers in linkage with or independently from a broadcasting program in the data format. It is provided to the viewers in the mode of Internet Web pages.

The main stream MS is composed of at least one partial stream. In concrete, the broadcasting program A is composed of partial streams A1 through A3 and the broadcasting program B is composed of partial streams B1, ... The storage stream SS is composed of storage streams A21 through A23, S21 through S23 and B21 through B23, .... The storage streams A21 through A23 correspond to the partial stream A2 of the main stream MS. In the same manner, the storage streams S21 through S23 correspond to the partial stream S and the storage streams B21 through B23 correspond to the partial stream B2, respectively. Each of the storage streams SS is replaced with the corresponding partial streams of the main stream MS in accordance with predetermined conditions. The correspondence of these streams is prescribed by control information described later.

The partial stream of the main stream MS has broadcasting control information BC and each of the storage streams SS has storage control information SC, respectively. Each of the broadcasting and storage control information BC and SC is information for controlling operating processes of the viewer's terminal 120.

In the present embodiment, the video and audio data of the main stream MS is prescribed as PES. The video and audio data of the storage stream SS is also prescribed as private PES. Or, when it is video and audio data which may be viewed by viewers in advance, it is prescribed as PES. It is also possible to prescribe the storage stream SS so as to transmit in the data broadcasting format. In such a case, it is prescribed in DSM-CC (Data Storage Media-Command and Control) section.

Each control information BC and SC composing a part of the stream is prescribed as a private section, is prescribed in an adaptation field of the PES or in a reserve field within the PSI. Each of these storage control information BC and SC may be prescribed within EIT (Event Information table) or SI (Service Information) used for recording with a timer. A link descriptor may be used for the broadcasting control information BC. The broadcasting control information BC may be transmitted in a data broadcasting stream.

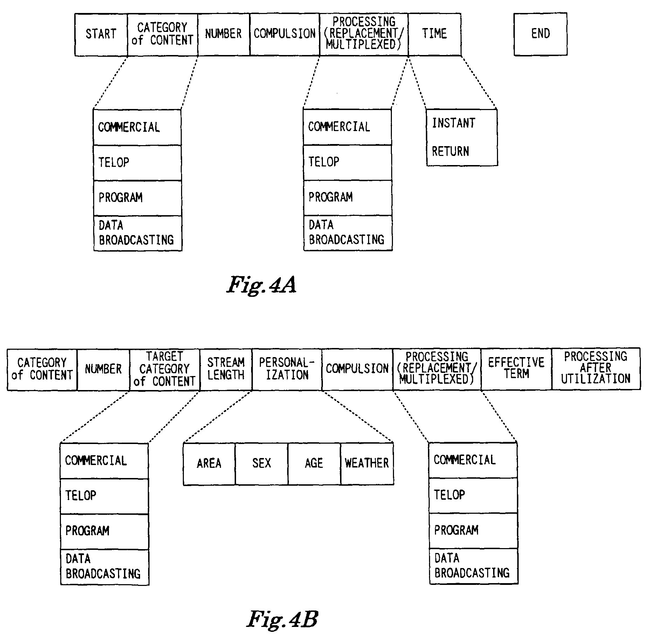

FIGs. 4A and 4B show one example of the control information. In concrete, FIG. 4A shows one example of the broadcasting control information and FIG. 4B shows one example of the storage control information.

The broadcasting control information has the following fields as shown in FIG. 4A. "Start" is information indicating that it is the head of a partial stream and designates broadcasting starting timing of contents of a program corresponding to that partial stream. "Category of Content" is information for discriminating a content of the partial stream and gives information for discriminating a "telop", "commercial", "program" or "data broadcasting" for example. "Number" is an identification number of each content discriminated by the category of the contents.

"Compulsion" is information for forcibly causing the terminal 120 to process regardless of terminal data described later. "Processing" is information for designating to replace the storage stream corresponding to the partial stream or to display in multiplex. It is noted that contents of the same kind are replaced with each other in case of "Replace", contents of the same or different kind are displayed in multiplex in case of "Multiplex Display". For instance, in case of the "Multiplex Display" of commercials, two commercials may be displayed on a screen or a program and a commercial may be displayed on the screen at the same time. In case of audio signals (audio stream), it is possible to arrange so that audio signals of a specified content is output by lowering the sound level of the main stream.

"Time" is information for designating broadcasting time of a partial stream corresponding to a stream. Here, "Instant" is a designation for outputting the partial stream in real-time and it specifies outputting time when the stream is not to be output in real-time. "Return" is a designation of time requiring to return to the main stream even when the contents of a program corresponding to a partial stream is not finished. The "Return" also includes "Real-time" for forcibly returning to the main stream when the main stream comes to be transmitted. The designated time is based on time held in the viewer's terminal 120. The time held by the viewer's terminal 120 is synchronized with a time stamp transmitted from the broadcasting station.

"End" is information indicating that the partial stream is going to end. "End" is used solely.

Meanwhile, as shown in FIG. 4B, the storage control information has the following fields. That is, "Category of Content" is information for discriminating a content of the storage stream, and gives information for discriminating a "telop", "commercial", "program" or data broadcasting". "Number" is an identification of each content discriminated by "Category of Content".

"Target Category of Content" is information for specifying which content (number) the storage stream corresponds to. "Target Category of Content" allows not only the same type of category like telops but also other type of categories to be designated. "Stream Length" gives the length of the stream. "Personalization" includes "Area", "Sex", "Age" and "Weather". "Area" is information indicating which broadcasting area is an object of the storage stream. For instance, it may be information such as a zip code and an area code of a telephone number or a new code may be given per local area.

"Sex" is information indicating an attribute such as the contents for men or for women. "Age" is information indicating an attribute such as the contents for infants or for adults. "Weather" is information indicating the contents of a program is related to weather, e.g., a commercial for a rainy day.

"Compulsion" is the same with the above-mentioned broadcasting control information. "Processing" is information for designating processing implemented by the viewer's terminal 120. In concrete, it designates an output mode (displaying method) or the like.

"Effective Period" is information related to an effective term of the storage stream corresponding to the control information. It is information for disabling the use of stored storage stream again when its effective term runs out. "Processing after Use" relates to processing after utilizing the storage stream. For instance, it designates to keep permanently or to scrap (erase). It is noted that it is also possible to be combined with "Effective Period" to designate scrapping at a storage stream whose effective period has passed.

It is also possible to arrange so that the broadcasting control information BC holds the whole field given by the storage control information SC.

Such control information is given on the broadcast provider side (broadcasting station) in general and is distributed to the terminal 120 in the manner incorporated in the stream. Then, the terminal 120 performs processing for controlling the broadcasting according to the contents designated for each field.

one of characteristic points of the present embodiment is that the viewer's terminal 120 performs information filtering to the multiplexed and transmitted streams based on the terminal data and that the viewer's terminal 120 restructures the final streams by using the streams which have been transmitted and stored.

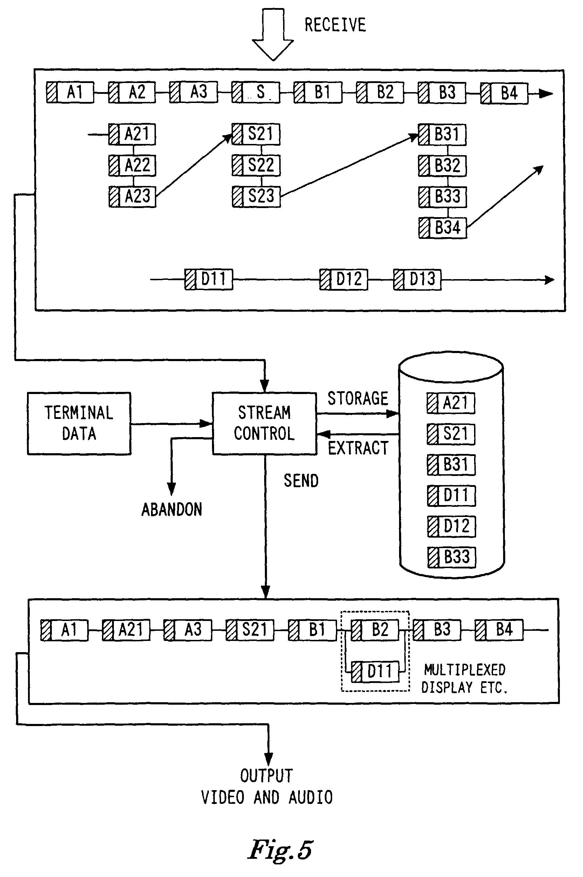

The control of the streams in the viewer's terminal 120 of the present embodiment is explained by using FIG. 5 for further clarification. FIG. 5 is a conceptual diagram for explaining the control of the streams in the viewer's terminal 120 of the present embodiment.

At first, time-division multiplexed and transmitted streams are demultiplexed per each stream. Each stream is structured as a set of partial streams. While the partial stream of the main stream is normally sent for video and audio output, the partial stream of the storage stream is stored or extracted in accordance with its control information and personal data. The extracted partial stream is sent in the manner of replacing the partial stream of the main stream. The unnecessary partial stream of the main stream is neglected (abandoned). The sent partial stream is restructured as a stream for outputting video and audio and is provided to the viewers as a broadcasting program via output units 126a and 126b.

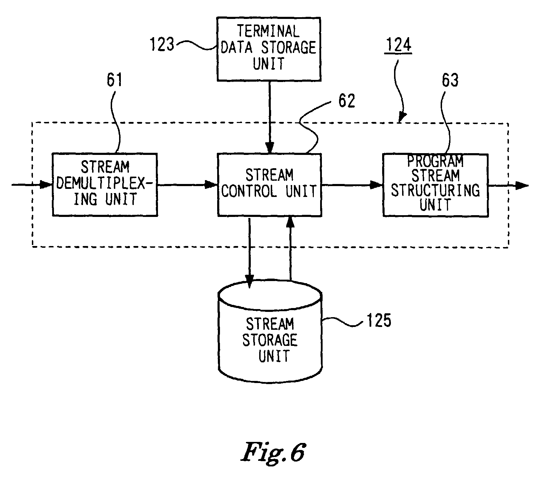

FIG. 6 is a block diagram showing the structure of the stream management unit 124. In the figure, a stream demultiplexing unit 61 demultiplexes the time-division multiplexed TS packets received via the receiver unit 121 per each stream and sends these to a stream control unit 62. The stream control unit 62 extracts the control information from the TS packet composing each stream and implements a process in accordance with the control information per stream. In case of the storage stream, the stream control unit 62 stores or extracts the TS packet composing the storage stream related to the control information to or of the stream storage unit 125 based on the control information and terminal data described later and sends this to a program stream structuring unit 63 (hereinafter referred to as a "PS information structuring unit 63"). whether it is the TS packet composing the storage stream related to the control information or not is decided based on PSI (Program Specific Information). In case of the main stream, the stream control unit 62 sends the TS packet composing the main stream or the TS packet composing the storage stream extracted instead of the partial stream of the main stream to the PS information structuring unit 63 based on the control information thereof. The PS information structuring unit 63 structures a program stream to be provided to the viewers as a broadcasting program from the TS packet composing the partial stream sent from the stream control unit 62 and sends it to the output control unit 127.

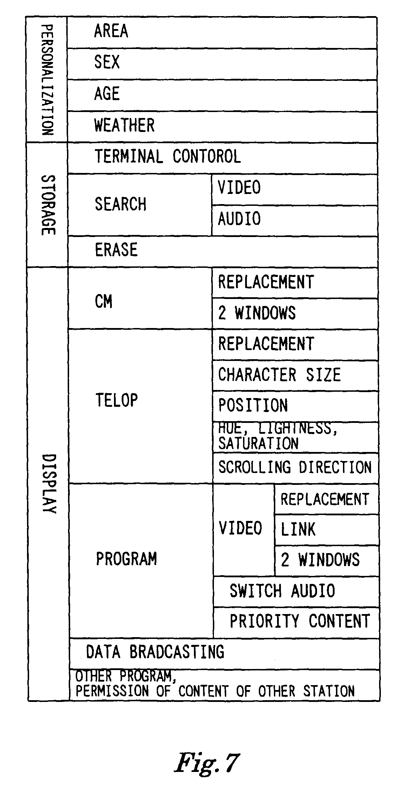

FIG. 7 is a table for explaining terminal data. While the terminal data is input mainly by the viewer from the input unit 122, it is possible to arrange so as to be input from the distributed stream or from a medium such as a CD-ROM. As shown in the figure, the terminal data comprises "Personalization", "Storage" and "Display" and is constructed further hierarchically. "Personalization" corresponds to the "Personalization" in the storage control information and designates personal information of the viewer himself. That is, "Area" is information related to the location where the viewer watches the broadcasting program and is designated by the zip code or telephone number. "Sex" is designated as "Male", "Female" or "None". "Age" is designated as "Year of Age" or "Age Group" for example. Such information is compared with the storage control information and in correspondence with the result of comparison, a program for male, a program for female or a program corresponding to the age group is selected. "Weather" is designated as "designated" or "None". These personalization data have priority.

"Storage" includes information related to "Terminal Control" "Search" and "Erase". "Terminal Control" is a designation for deciding whether or not to comply with "Processing" of the control information given on the broadcasting station side and, when complying, for controlling how to process. "Search" is information for designating to search a specific video and audio data pattern (hereinafter referred to as "specific pattern") appearing in the stream. Either or both of a video pattern and a audio pattern are specified as the specific pattern. "Erase" designates to erase streams. It is provided to allow the viewer himself to designate to erase streams, even if they are the stored streams, to prevent an overflow because the storage capacity of the stream storage unit 125 is limited.

"Display" is information for designating an output mode of streams given to the output units 126. The output modes include a designation of displaying "Replacement" or "Two Screen" and in case of replacement, designations of "size", "position" and others. These designations are input by the viewer via the input unit 122, are read as recording medium and are stored and held in the terminal data storage unit 123.

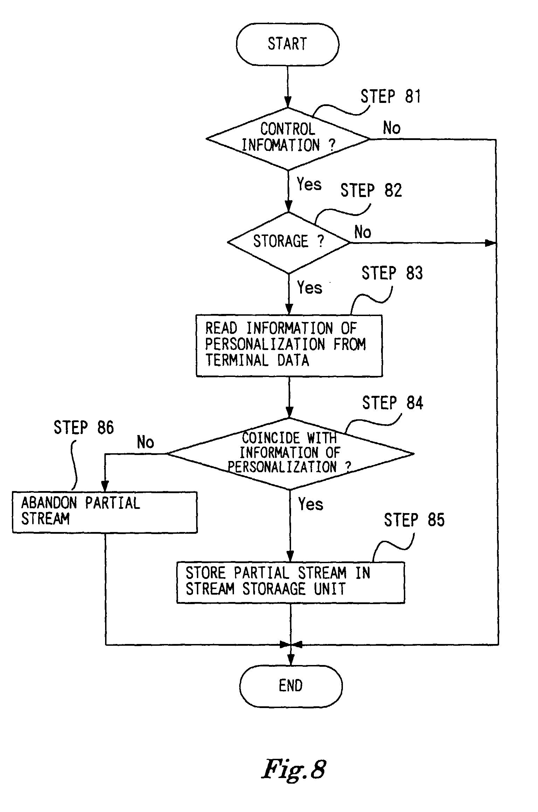

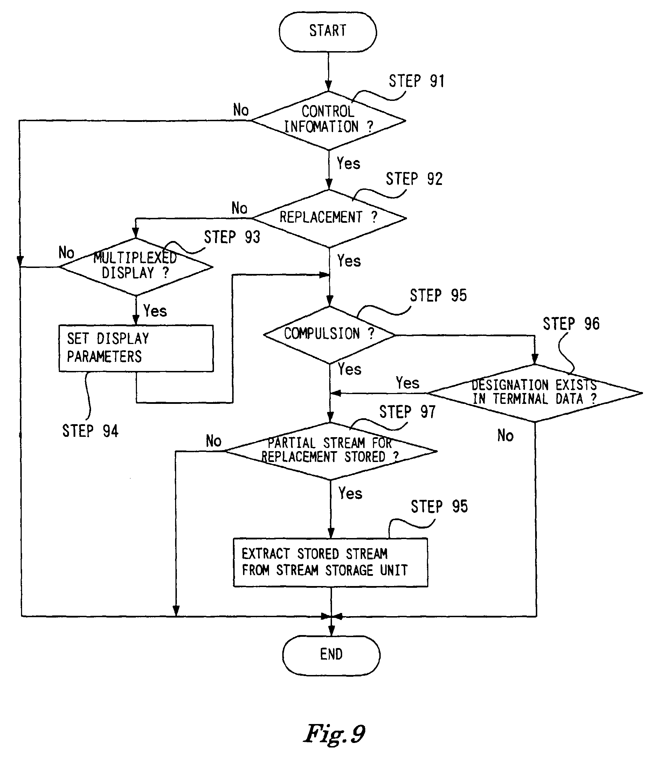

Next, the operation of the stream control unit 62 will be explained based on FIGs. 8 and 9. Because processing of the stream control unit 62 is different depending on whether the stream sent from the stream demultiplexing unit 61 is the main stream or the storage stream, the explanation is given below by dividing it into two parts. FIG. 8 is a flowchart for explaining the operation of the stream storage control unit 62 with respect to the storage stream and FIG. 9 is a flowchart for explaining the operation of the stream storage control unit 62 to the main stream.

In FIG. 8, the stream control unit 62 decides at first whether or not the packet sent is the storage control information in STEP 81. When it is decided to be the control information in STEP 81, the stream control unit 62 decides whether or not there is a designation of stream filtering control in the "Terminal Control" field by making reference to the terminal data in STEP 82. When it is decided to be filtering in STEP 82, the stream control unit 62 collates to the "Personalization" field of the terminal data stored in the terminal data storage unit 123 and decides whether or not the contents of the "Personalization" in the terminal data coincides with the "Personalization" of the control information in STEP 84. When it is decided that they coincide in STEP 84, the stream control unit 62 outputs a partial stream related to the control information to the stream storage unit 125 in STEP 85. For instance, when the "Personalization" of the control information specifies "Tokyo" and when the "Personalization" of the terminal data also designates "Tokyo", the storage stream related to the control information is stored. It is noted that when priority is given to the "Personalization" of the terminal data, it is decided whether or not to store it in accordance with the priority.

Meanwhile, when it is decided that they do not coincide in STEP 85, the partial stream related to the control information is neglected (abandoned) in STEP 86. Thereby, the storage stream required by the viewer is stored in the stream storage unit 125 based on the personal information in the terminal data.

Next, the operation of the stream control unit 62 in case of the main stream is explained below. In FIG. 9, the stream control unit 62 decides at first whether or not a packet concerned is broadcasting control information in STEP 91. When it is decided to be control information in STEP 91, the stream control unit 62 collates to the "Processing" field within the control information to decide whether or not that area is "Replacement" in STEP 92. When it is decided that it is not "Replacement" in STEP 92, the stream control unit 62 decides whether or not it is "Multiplex Display" in STEP 93. When it is decided that it is "Multiplex Display", the stream control unit 62 sets displaying parameters set in advance. "Display" stored in the terminal data storage unit 123 is normally preferentially applied as the displaying parameters and when there is no designation. "Display" belonging to the main stream and "Display" belonging to the partial stream stored in the stream storage unit 125 are searched and set in this order.

After setting the displaying parameters or when it has been decided in STEP 92 that it is "Replacement", the stream control unit 62 collates the "Compulsion" field to decide whether or not it is "Compulsion" in STEP 95. When it is decided that it is not "Compulsion" in STEP 95, the stream control unit 62 collates the terminal data storage unit 123 and decides whether or not "Display" is given to the terminal data in STEP 96. That is, when it is not "Compulsion", the right for designating the storage stream to be displayed and the output mode of the storage stream is given to the viewer. When it is decided that it is "Compulsion" in STEP 95 or when it is decided that there is a designation in the terminal data in STEP 96, the stream control unit 62 collates the stream storage unit 125 to decide partial streams of the main stream corresponding to the control information whether or not a partial stream for replacement is stored in STEP 97. When it is decided that the partial stream is stored in STEP 97, the stream control unit 62 extracts the partial stream for replacement from the stream storage unit 125 in STEP 98.

Thus, the stream control unit 62 designates the partial stream to be broadcasted based on the control information of the main stream and selects the parameters for controlling the display.

As described above, according to the present embodiment, only the streams required by the viewer are stored. It then enables only information truly required by the viewer to be provided to the viewer without omission. Because no stream not required by the viewer is stored or displayed in this case, the memory on the terminal side may be used efficiently.

Because the stream to be stored is transmitted and stored prior to the corresponding part of the main stream, it may be provided to the viewer by being extracted at any time in necessary timing.

Still more, because the viewer's personal information such as "Area" is contained in the control information, it becomes possible to store and display the stream which meets with the taste of the viewer.

Meanwhile, the present embodiment enables a nation-wide program and a local program to be transmitted through the same transmission path even when a wide area broadcasting media such as a satellite broadcasting is employed.

Further, a stream which has been stored may be utilized again for a stream to be repeatedly transmitted by specifying the storage stream to be kept permanently by the control information. It allows an information amount to be originally transmitted to be reduced and the broadcasting band to be effectively utilized.

Although the flows of the processing operations have been explained sequentially in the embodiment described above, the present embodiment is not confined only thereto. Accordingly, the procedure of the processes may be switched or the operations may be processed in parallel as long as no contradiction occurs in the processing operations.

Still more, although the above embodiment has been explained on the premise of being in conformity to MPEG 2, it may be what is in conformity to MPEG 4.

### Second Embodiment

The second embodiment is characterized in that when a specific pattern appears in a storage stream, the storage stream is controlled.

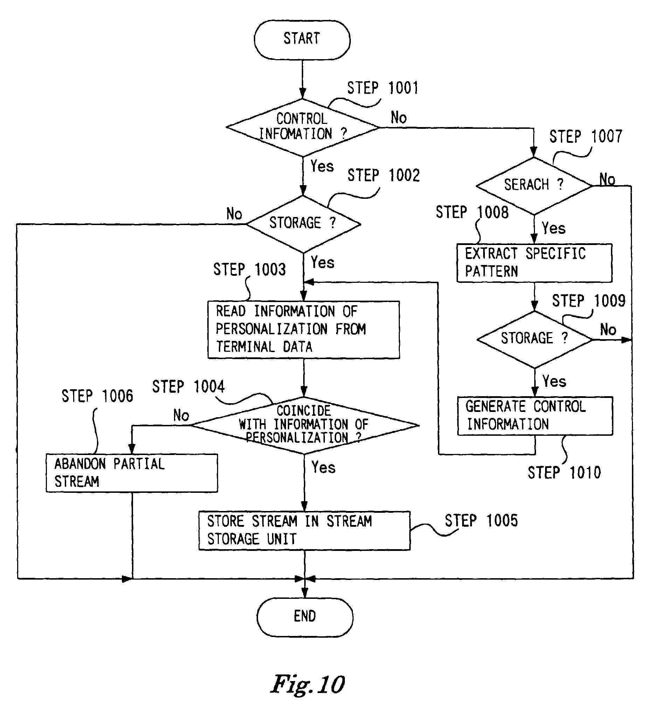

FIG. 10 is a flowchart for explaining the operation of the stream control unit 62 performed on the storage stream. In the figure, processes from STEP 1001 through STEP 1006 are the same with those processed in the first embodiment shown in FIG. 8.

At first, the stream control unit 62 decides whether or not a packet concerned is storage control information in STEP 81. When it is decided that it is not control information, the stream control unit 62 collates "Search Specification" to decide whether or not there is the designation of search of the specific pattern in STEP 86. It is implemented not by including information related to a designation such as storage within the control information but by correlating the information related to the designation of storage in the specific pattern in the information related to video and audio data broadcasting. When it is decided in STEP 86 that the specific pattern is designated, the specific pattern is extracted from the stream related to the control information concerned in STEP 87. Next, the stream control unit 62 decides whether or not storage of the extracted specific pattern is specified by the specific pattern in the terminal data in STEP 88. When it is decided that the storage is designated in STEP 88, the stream control unit 62 generates the storage control information SC based on the terminal data storage unit 123 to add the storage control information to the storage stream and adds "Filtering" to "Terminal Control" in STEP 1010. Then, the process advances to STEP 1003. The processes on and after STEP 1003 are the same with those in the first embodiment.

As described above, the present embodiment allows the storage of the stream to be controlled based on the specific pattern appearing in the stream.

It is noted that "Search" to the specific pattern may be input to a specific pattern designated by the broadcasting station in advance by using the input unit 122. It is also possible to arrange so as to allow the viewer to make "Storage" on a specific pattern when the specific pattern appears on a screen in which a program is broadcasted.

### Other Embodiments

Each of the embodiments described above is a mere illustration for explaining the invention and is not intended to limit the invention to such embodiment. Accordingly, the invention may be embodied in various modes without departing from its gist.

For example, although the embodiments described above have been explained so as to replace part of the main stream for TV broadcasting with a storage stream, the invention is not specifically limited to such a case. Accordingly, the invention may be applied also to data broadcasting. It is possible to transmit a data broadcasting stream (corresponds to the main stream) and a storage data broadcasting stream (corresponds to the storage stream) to be transmitted and displayed in real-time and to replace the data broadcasting stream with the storage data broadcasting stream in accordance with control information and terminal data transmitted together with these streams.

A plurality of individual streams need not be transmitted as one multiplexed stream. In short, it will do if the plurality of individual streams are transmitted to the viewer's terminal. When the terminal apparatus has a function of receiving a plurality of multiplex streams simultaneously, the main stream and its corresponding storage stream may be included in the different multiplexed streams. It is also possible to arrange so as to provide the storage stream by a recording medium such as CD-ROM and DVD.

Still more, cryptograph may be included in the control information. The terminal apparatus compares cryptographic information in the terminal data of the viewer with the cryptographic information within the stream and conducts the storage and replacement only when the result of comparison shows their coincidence.

The invention may also be realized by executing a program having the predetermined functions by a computer. The program is recorded on a recording medium, thus composing a programmed product. The computer includes a so-called microcomputer which performs predetermined processes by interpreting by a so-called central processing unit, i.e., by CPU and MPU. The recording medium includes a memory such as a RAM and a ROM besides a hard-disk (HD), a DVD-RAM, a flexible disk (FD) and a CD-ROM.

The entire disclosure of Japanese Patent Application No. 10-184431 filed on June 30, 1998 including specification, claims, drawings and summary are incorporated herein by reference in its entirety.

## Claims

1. A terminal apparatus, comprising:
stream control means for controlling an individual stream based on control information correlated with the individual stream; and
output control means for outputting the individual stream controlled by said stream control means to an output unit.

2. The terminal apparatus according to Claim 1, wherein said stream control means includes extracting means for extracting a second individual stream from a storage unit based on control information correlated with a partial stream composing a first individual stream.

3. The terminal apparatus according to Claim 2, wherein said stream control means includes structuring means for structuring a new individual stream by modifying the partial stream composing the first individual stream with the extracted second individual stream.

4. A terminal apparatus, comprising:
a demultiplexer for demultiplexing a transmitted multiplexed stream into a plurality of individual streams; and
stream control means for outputting a first individual stream within said plurality of individual streams demultiplexed by said demultiplexer to an output unit and outputting a second individual stream within said plurality of individual streams to a storage unit.

5. The terminal apparatus according to Claim 4, wherein said stream control means replaces a partial stream composing said first individual stream with the second individual stream which has been transmitted temporarily prior to said partial stream and stored in said storage unit based on control information correlated with said first individual stream to be structured as a new first individual stream.

6. A terminal apparatus, comprising:
a receiver unit for receiving a transmitted multiplexed stream;
a demultiplexer for demultiplexing the multiplexed stream received by said receiver unit into a plurality of individual streams;
an output unit for outputting video and/or audio information based on said individual stream;
a storage unit for storing said individual stream;
first control means for storing a second individual stream in said storage unit when second control information correlated with the second individual stream within said plurality of individual streams demultiplexed by said demultiplexer satisfies predetermined conditions;
second control means for extracting said second individual stream from said storage unit when first control information correlaed with the first individual stream within said plurality of individual streams demultiplexed by said demultiplexer satisfies predetermined conditions; and
structuring means for replacing a partial stream composing said first individual stream with the second individual stream which has been extracted by said second control means to be structured as a new first individual stream.

7. The terminal apparatus according to Claim 6, further comprising a terminal information storage unit for storing terminal information designated by a user;
wherein said first control means compares said second control information and said terminal information and stores said second individual stream to said storage unit in accordance with the result of comparison.

8. The terminal apparatus according to Claim 6, wherein said second control means compares said first control information and said second control information and extracts said second individual stream in accordance with the result of comparison.

9. The terminal apparatus according to any one of Claims 6 through 8, wherein said first control information has at least first identification information for identifying a partial stream composing said first individual stream and processing designating information for designating the processing to be performed on said partial stream;
said second control information has at least second identification information correlated with the partial stream composing said first individual stream; and
said second control means extracts said second individual stream correlated with said second identification information correlated with said first identification information when said processing specifying information specifies a modifying process.

10. The terminal apparatus according to Claim 9, wherein said processing designating information is information for designating at least either one of replacing process or a superposing process; and
said structuring means replaces said partial stream with said second stream when said processing designating information designates the replacing process and superposes said partial stream with said second stream as a new individual stream when said processing designating information designates the superposing process.

11. A product in which a program for controlling a terminal apparatus is recorded, comprising:
demultiplexing means for demultiplexing a transmitted multiplexed stream into a plurality of individual streams;
first control means for storing a second individual stream in a storage unit when second control information correlated with a second individual stream within said plurality of individual streams demultiplexed by said demultiplexer means satisfies predetermined conditions;
second control means for extracting said second individual stream from said storage unit when first control information correlated with the first individual stream within said plurality of individual streams demultiplexed by said demultiplexer means satisfies predetermined conditions; and
structuring means for replacing a partial stream composing said first individual stream with the second individual stream which has been extracted by said second control means to be structured as a new first individual stream.

12. A broadcasting apparatus, comprising:
first control information appending means for correlating first control information per partial stream composing a first individual stream;
second control information appending means for correlating second control information correlated with said first control information per second individual stream; and
stream generating means for generating a multiplexed stream based on the first individual stream composed of partial streams correlated with said first control information and the second individual stream correlated with said second control information.

13. The broadcasting apparatus according to Claim 12, wherein said stream generating means generates said multiplexed stream such that said second individual stream correlated with said partial stream is transmitted prior to said partial stream.

14. The broadcasting apparatus according to Claim 12 or 13, further comprising a transmitter unit for transmitting the multiplexed stream generated by said stream generating means to a specific transmitting medium.

15. A digital stream control method, comprising the steps of:
controlling an individual stream based on control information correlated with the individual stream; and
outputting the individual stream controlled in said control step to an output unit.

16. The digital stream control method according to Claim 15, wherein said control step comprises a step of extracting a second individual stream from a storage unit based on control information correlated with a partial stream composing a first individual stream.

17. The digital stream control method according to Claim 16, wherein said control step comprises a step of structuring a new individual stream by replacing a partial stream composing a first individual stream by the extracted second individual stream.
